# EUROPEAN PATENT SPECIFICATION

(11) **EP 0 296 643 B1**
(45) Date of publication and mention of the grant of the patent: **29.12.1993**
(21) Application number: 88200810.5
(22) Date of filing: 26.04.1988
(51) Int. Cl.: B64D 27/00

(54) **Fire resistant seal**
Feuerfeste Dichtung
Joint résistant au feu

(30) Priority: 22.06.1987 US 64666
(43) Date of publication of application: 28.12.1988
(73) Proprietor: THE BOEING COMPANY, Seattle, Washington 98124-2207 (US)
(72) Inventor: Chee, Wan T., Bellevue, WA 98005 (US); Aspinall, Eric L., Federal Way, WA 98023 (US)
(74) Representative: Hoijtink, Reinoud

(56) References cited:
- EP-A- 0 131 990
- DE-A- 2 106 774
- GB-A- 775 092
- GB-A- 1 507 071
- US-A- 4 219 203
- US-A- 4 441 726
- NASA Tech Brief 22 March 1983, J.F. KENNEDY SPACE CENTER, FLORIDA page 1; C.A.GILLESPIE: "HEAT AND PRESSURE SEAL FOR DOORS"
- NASA Tech Brief 27 September 1983, L.B.JOHNSON SPACE CENTER,HOUSTON,TEX page 1; C.W.ETZEL: "CERAMIC-CORD GAS SEAL"
- PATENT ABSTRACTS OF JAPAN vol. 10, no. 33 (M-452)(2090) 08 February 1986, & JP-A-60 188663 (DAINICHI NIPPON DENSEN K.K.) 26 September 1985,

## Description

### Technical Field

The present invention relates to heat insulators, and more particularly, to a fire resistant seal.

### Background of the Invention

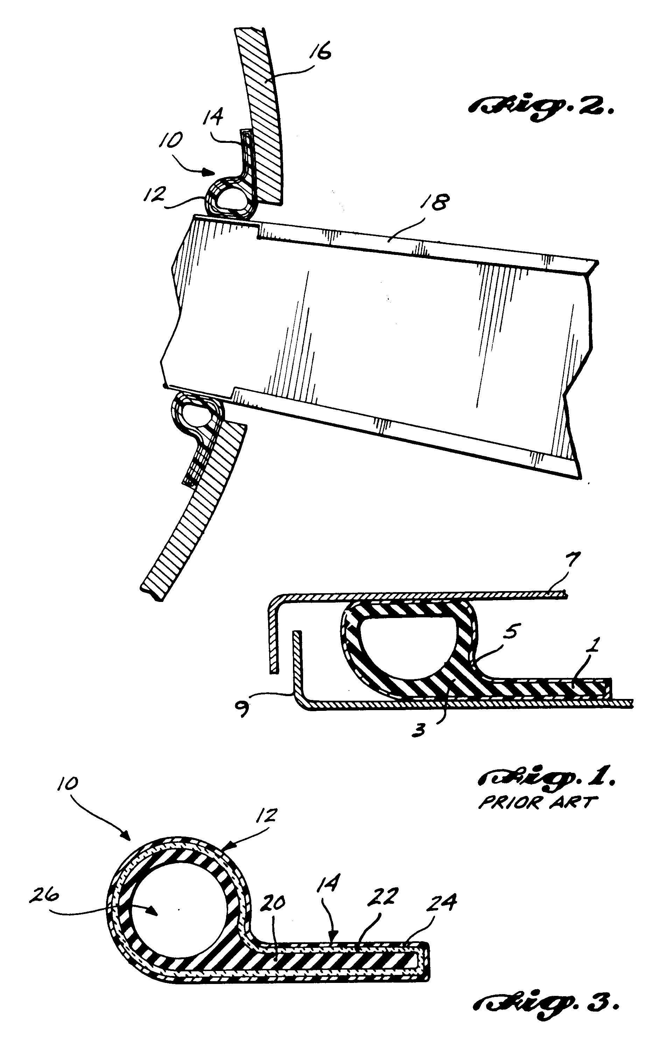

Compressible and flexible fire resistant seals are used in aircraft engines to maintain an effective heat and flame barrier in areas where there is relative movement between the aircraft engine nacelle and the engine support structure. Conventional seals are typically constructed of preformed elastomer sections with fabric protective covering. Because such materials are not fire resistant, prior seals have required overlapping metal flame shields to insure the seal's ability to contain fire in the designated zone. One prior art seal/shield configuration is shown in FIGURE 1. FIGURE 1 shows a fire seal 1, comprised of a core formed of an elastomeric material 3 and a fabric protective covering 5 compressed between a pair of flame shield members 7 and 9. In use, one of the flame shield members is attached to on aircraft engine frame and the other is attached to an airframe support structure.

The seal/shield configuration illustrated in FIGURE 1 and described above is unsuitable for use on advanced technology prop fan engines because the structure for attaching these new engines to an airframe is designed to permit large deflections between the engine and the airframe in order to isolate low-frequency vibrations. Prior art seal/shield configurations of the type illustrated in FIGURE 1 are unusable because when large deflections occur, the flame shield members 7 and 9 separate vertically and horizontally, allowing direct exposure of the seal 1 to high temperature flames. This results in a rapid breakdown of the seal and consequent damage to the engine support structure.

In order to adequately insulate the engine support structure, it is necessary to either use larger flame shields or develop a fire seal that withstands direct exposure to flames. Because flame shields have the disadvantage of adding more weight and complexity to the engine, as well as increasing the cost, it is desirable to eliminate them.

A fire resistant seal that overcomes the aforementioned disadvantages and provides a lightweight, flexible barrier that withstands direct exposure to flames is known from US-A-4441726. This known seal, which has the features of the preamble of claim 1, comprises a generally circular core formed by a dense metal wire mesh or ceramic rope material, enclosed by two metal mesh sleeves. The core is surrounded by an intermediate wrap member of braided ceramic fibre, in the shape of a tadpole. The intermediate wrap member is enclosed by a two-layer wrap member of metal braided wire material. Being made of a dense wire mesh or ceramic rope the compressibility of the core cannot be easily adapted to various design requirements.

### Summary of the Invention

The object of the invention is therefore to provide a fire-resistant seal of the type described above, with which the compressibility of the core material can easily be altered, in order to meet varying design requirements. According to the invention, this is accomplished in that said first layer defines a hollow central portion, which is at least partially filled with a material for altering the compressibility of the toroidal-shaped portion.

In a preferred embodiment, the first layer is constructed of an elastomeric material. This allows the seal to be manufactured using the same fabrication techniques used for manufacturing conventional fabric covered elastomeric seals. Furthermore, this guarantees virtually leak-free sealing action. It is further preferred that the first layer is bonded to the second layer, and the second layer is bonded to the third layer. The flange portion is preferably intergrally formed with the compressible toroidal shaped portion.

Preferably, the third layer is constructed of Dacron® (polyethylene terephthalate fiber).

In a further preferred embodiment, the structural members comprise an aircraft engine nacelle, and an engine support.

As will be appreciated from the foregoing description, a fire resistant seal formed in accordance with the present invention eliminates the additional weight and complexity that results from the use of metal flame shields, and allows perfect matching of the compressibility characteristics of the seal to the varying requirements that occur when describing a moveable structure. The addition of the ceramic fiber material shielding the elastomeric material permits construction of the fire resistant seal having the same cross-sectional configuration as elastomeric seals now existing, as well as new cross-sectional configurations. The elimination of the metal flame shields results in a potential high cost reduction in the insulation of the aircraft engine nacelle and the engine support structure.

### Brief Descripption of the Drawings

The foregoing and other advantages and features of this invention will become more readily appreciated as the same becomes better understood by reference to the following detailed description when taken in conjunction with the accompanying drawings wherein:
FIGURE 1 is a cross-sectional diagram of a prior art fire seal and metal flame shield combination;
FIGURE 2 is a cross-sectional view of a fire resistant seal formed in accordance with the invention in an aircraft engine nacelle; and,
FIGURE 3 is an enlarged cross-sectional view of the fire resistant seal shown in FIGURE 2.

### Detailed Description of the Preferred Embodiment

FIGURES 2 and 3 illustrate a preferred embodiment of a fire resistant seal 10 formed in accordance with the present invention. The fire resistant seal 10 illustrated in FIGURES 2 and 3 comprises a toroidal-shaped compressible portion 12 and a flange portion 14. Preferably the flange portion 14 is integrally formed with the compressible portion 12.

FIGURE 2 shows a typical way of installing a fire resistant seal 10 formed in accordance with the invention in the nacelle 16 of an aircraft engine about an engine support 18 that extends from the engine (not shown) to the aircraft (also not shown). The flange portion 14 is shown attached to the nacelle 16 by bonding, although riveting or other suitable means may be used. When properly installed, the fire resistant seal 10 will be partially compressed as it presses against the aircraft engine support 18. Installation in this manner insures that during relative motion between the nacelle 16 and the aircraft engine support 18 a constant heat and flame barrier will be maintained by the fire resistant seal 10. This particular installation allows for large deflections between the nacelle 16 and the aircraft engine support 18 while maintaining an effective heat and flame barrier.

FIGURE 3 is a cross-sectional view showing that the fire resistant seal 10 illustrated in FIGURE 2 comprises three layers -- an inner layer 20, a middle layer 22 and an outer layer 24. The inner layer 20 is preferably formed of an elastomer material that is con pressible and flexible. The middle layer 22 is attached to the inner layer 20, preferably by bonding or vulcanizing. The middle layer 22 is constructed of a ceramic fiber material. Suitable ceramic fiber materials are Nextel 12, produced by the 3M Company, located in St. Paul, Minnesota, and Velex-Pius, produced by Newtex Industries, Inc. Both of these ceramic fiber materials are capable of withstanding a temperature of over 650°C (3,000°F) for more than 15 minutes. This ability eliminates the need for the metal flame shields 7, 9 used in prior art seal/shield configurations of the type shown in FIGURE 1 and described above.

The outer layer 24 is attached to the outer surface of the middle layer 22, preferably by bonding. This outer layer 24 acts as a protective cover to prevent wear of the middle layer 22 due to chafing or rubbing on the nacelle 16 or the aircraft engine support 18. Ideally, the outer layer 24 is constructed of Dacron® or some other material having high abrasion resistance.

As shown in FIGURE 3, the toroidal-shaped compressible portion 12 has a hollow central portion 26 defined by the elastomer inner layer 20. The ceramic fiber material middle layer 22 totally encloses the elastomer inner layer 20. Likewise, the wear resistant outer layer 24 totally encloses the middle layer 22 and the inner layer 20. This provides a fire seal that is totally enclosed and fire resistant on all sides. The hollow central portion is partially or completely filled with a material to alter the compressibility of the toroidal-shaped portion.

Although the invention has been illustrated and described in the context of aircraft engines, it is to be understood that the fire resistant seal can be used in any application where protection from direct exposure to flames or high temperatures is desired.

## Claims

1. A fire resistant seal (10) for providing high temperature insulation and flame shielding between structural members (16,18) that are movable relative to each other, the seal (10) comprising:
(a) a flange portion (14) for attaching the seal (10) to a first structural member (16); and,
(b) a compressible toroidal-shaped portion (12) having an inner core formed by a first layer (20) of a resilient material and enclosed by a second layer (22) of an elastic ceramic fiber material, the second layer (22) being enclosed by a third layer (24) of an elastic abrasion resistant material, such that said compressible toroidal-shaped portion (12) maintains contact with the structural members (16,18) when the structural members (16,18) change position relative to each other due to stress and vibration, **characterized in that** said first layer (20) defines a hollow central portion (26), which is at least partially filled with a material for altering the compressibility of the toroidal-shaped portion (12).

2. The seal (10) of claim 1, **characterized in that** the first Layer (20) is constructed of an elastomeric material.

3. The seal (10) of claim 2, **characterized in that** said first layer (20) is bonded to said second layer (22), and said second layer (22) is bonded to said third layer (24).

4. The seal (10) of any one of the preceding claims, **characterized in that** said flange portion (14) is integrally formed with said compressible toroidal-shaped portion (12).

5. The seal (10) of any one of the preceding claims, **characterized in that** the third Layer (24) is constructed of a polyethylene terephthalate fiber.

6. The seal (10) of any one of the preceding claims, **characterized in that** the structural members (16,18) comprise an aircraft engine nacelle (16) and an engine support (18).

## Patentansprüche

1. Eine feuerfeste Dichtung (10) zum Vorsehen einer Hochtemperaturisolierung und Flammenabschirmung zwischen strukturellen Teilen (16, 18), die relativ zueinander bewegbar sind, wobei die Dichtung (10) folgendes umfaßt:
(a) einen Flanschteil (14) zum Anbringen der Dichtung (10) an einem ersten strukturellen Teil (16); und
(b) einen zusammendrückbaren toroidförmigen Teil (12), der einen inneren Kern hat, welcher durch eine erste Schicht (20) aus einem elastischen Material ausgebildet und von einer zweiten Schicht (22) aus einem elastischen Keramikfasermaterial umschlossen ist, wobei die zweite Schicht (22) durch eine dritte Schicht (24) aus elastischem abriebfestem Material umschlossen ist, derart, daß der zusammendrückbare toroidförmige Teil (12) Kontakt mit den strukturellen Teilen (16, 18) aufrechterhält, wenn die strukturellen Teile (16, 18) die Position relativ zueinander aufgrund von Beanspruchung und Vibration ändern, dadurch **gekennzeichnet,** daß die erste Schicht (20) einen hohlen mittigen Teil (26) begrenzt, welcher wenigstens teilweise mit einem Material zum Verändern der Zusammendrückbarkeit des toroidförmigen Teils (12) gefüllt ist.

2. Die Dichtung (10) des Anspruchs 1, dadurch **gekennzeichnet,** daß die erste Schicht (20) aus einem elastomeren Material aufgebaut ist.

3. Die Dichtung (10) des Anspruchs 2, dadurch **gekennzeichnet,** daß die erste Schicht (20) an die zweite Schicht (22) gebunden ist, und die zweite Schicht (22) an die dritte Schicht (24) gebunden ist.

4. Die Dichtung (10) von irgendeinem der vorhergehenden Ansprüche, dadurch **gekennzeichnet,** daß der Flanschteil (14) integral mit dem zusammendrückbaren toroidförmigen Teil (12) ausgebildet ist.

5. Die Dichtung (10) von irgendeinem der vorhergehenden Ansprüche, dadurch **gekennzeichnet,** daß die dritte Schicht (24) aus Polyethylenterephthalatfaser aufgebaut ist.

6. Die Dichtung (10) von irgendeinem der vorhergehenden Ansprüche, dadurch **gekennzeichnet,** daß die strukturellen Teile (16, 18) eine Flugzeugtriebwerksgondel (16) und einen Triebwerksträger (18) umfassen.

## Revendications

1. Joint d'étanchéité (10) résistant à l'incendie, destiné à assurer une isolation contre les températures élevées et une protection contre la flamme entre des organes (16, 18) de structure qui sont mobiles l'un par rapport à l'autre, le joint d'étanchéité (10) comprenant :
(a) une partie (14) de flasque destinée à fixer le joint d'étanchéité (10) à un premier organe (16) de structure, et
(b) une partie compressible (12) de forme toroïdale, ayant une âme interne formée d'une première couche (20) d'une matière élastique et entourée d'une seconde couche (22) d'une matière élastique de fibres céramiques, la seconde couche (22) étant entourée par une troisième couche (24) d'une matière élastique résistant à l'abrasion, afin que la partie compressible (12) de forme toroïdale maintienne le contact avec les organes (16, 18) de structure lorsque les organes (16, 18) de structure changent de position mutuellement sous l'action des contraintes et des vibrations, caractérisé en ce que la première couche (20) délimite une partie centrale creuse (26) qui est remplie au moins partiellement d'une matière destinée à modifier la compressibilité de la partie (12) de forme toroïdale.

2. Joint d'étanchéité (10) selon la revendication 1, caractérisé en ce que la première couche (20) est formée d'une matière élastomère.

3. Joint d'étanchéité (10) selon la revendication 2, caractérisé en ce que la première couche (20) est collée à la seconde couche (22), et la seconde couche (22) est collée à la troisième couche (24).

4. Joint d'étanchéité (10) selon l'une quelconque des revendications précédentes, caractérisé en ce que la partie de flasque (14) est formée afin qu'elle soit solidaire de la partie compressible (12) de forme toroïdale.

5. Joint d'étanchéité (10) selon l'une quelconque des revendications précédentes, caractérisé en ce que la troisième couche (24) est formée de fibres de téréphtalate de polyéthylène.

6. Joint d'étanchéité (10) selon l'une quelconque des revendications précédentes, caractérisé en ce que les organes (16, 18) de structure sont une nacelle (16) de moteur d'aéronef et un support (18) de moteur.
